# EUROPÄISCHE PATENTSCHRIFT

(11) **EP 2 231 774 B1**
(45) Veröffentlichungstag und Bekanntmachung des Hinweises auf die Patenterteilung: **30.11.2011**
(21) Anmeldenummer: 09704627.0
(22) Anmeldetag: 20.01.2009
(51) Int. Cl.: C08L 23/06, C08L 23/08, D01F 6/46, D01F 8/06, D04H 1/00, D04H 3/00

(54) **POLYMERMISCHUNG**
POLYMER MIXTURE
MÉLANGE POLYMÈRE

(30) Priorität: 21.01.2008 DE 102008005466
(43) Veröffentlichungstag der Anmeldung: 29.09.2010
(73) Patentinhaber: Fiberweb Corovin GmbH, 31224 Peine (DE); Fiberweb Berlin GmbH, 12277 Berlin (DE)
(72) Erfinder: BORNEMANN, Steffen, 31241 Klein Lisede (DE); KLAUSEN, Thomas, 31224 Peine (DE)
(74) Vertreter: Schulz, Björn
(86) Internationale Anmeldenummer: PCT/EP2009/000323
(87) Internationale Veröffentlichungsnummer: WO 2009/092562

(56) Entgegenhaltungen:
- WO-A-01/98409
- WO-A-99/14262
- US-A1- 2005 164 586

## Beschreibung

Die vorliegende Erfindung betrifft ein Vlies mit einer Vliesfaser, welches eine spezielle Polymermischung aufweist. Ebenfalls ist die Vliesfaser selbst wie auch die Verwendung der Polymermischung beansprucht.

Insbesondere bei der Herstellung von Vliesstoffen ist es notwendig, auf das Ausgangsmaterial zu achten, um gewünschte Parameter herstellen zu können. Hierbei ist es oftmals notwendig, durch Tests herauszufinden, ob ein Material überhaupt für eine Verwendung geeignet ist. Materialdatenblätter verschiedenster Hersteller geben hierzu Anhaltspunkte, sind jedoch nicht geeignet, für spezielle Anwendungen die notwendige Aussagekraft zur Verfügung stellen zu können. Da der Aufwand zur Herstellung von Polymeren entsprechend aufwendig ist, wird des Weiteren seitens der Hersteller nur ein beschränkt verfügbares Polymerangebot zur Verfügung gestellt.

Es ist daher oftmals an dem Anwender beziehungsweise dem Hersteller von Vliesen, herauszufinden, wie ein geeignetes Vlies von seinen Eigenschaften, von seiner Herstellungsweise, aber auch von seiner Polymerzusammensetzung beschaffen sein soll.

Vliese werden aus Kostengründen oftmals aus Polyolefinen hergestellt. Wird ein Polyethylen als Ausgangsmaterial genutzt, gibt es hierzu bekannten Stand der Technik. Beispielsweise aus der US 6,391,443 wie auch aus der US 7,223,818 gehen jeweils verschiedene Mischungen und Anwendungsgebieten der vorgestellten Polymere für Vliesfasern hervor. Aus der US 6,391,443 geht eine Polymermischung hervor, die zwei verschiedene Polyethylenkomponenten mit unterschiedlichen Schmelzpunkten aufweist. Während das eine Polyethylen eine Dichte zwischen 0,85 bis 0,93 g/cm³ mit einem niedrigen Schmelzpunkt aufweisen solle, solle das andere Polyethylen eine Dichte von 0,94 g/cm³ oder mehr aufweisen und einen hohen Schmelzpunkt besitzen. Des Weiteren solle sich ein spezielles thermisches Verhalten einstellen, wie es durch DSC-Messung dargestellt ist. Das derartig hergestellte Vlies soll bevorzugt für medizinische Materialien genutzt werden und insbesondere mittels Gammastrahlung sterilisierbar sein. Die US 7,223,818 wiederum beschreibt Polymermischungen, bei denen eine Mischung von zwei verschiedenen Polyethylenen mit eingesetzt wird. Die beiden Polyethylene sollen eine spezifische Abhängigkeit in Bezug auf ihre Dichten wie auch hinsichtlich ihrer MFI besitzen.

Aus dem Filmbereich ist aus der WO 01/98409 A1 ein Gemisch aus Polyethylenen hervorgehend, wobei das eine Polyethylen auf Basis eines Metallocenkatalysators hergestellt ist und eine Dichte von weniger 0,916 g/cm³ aufweisen solle. Des Weiteren solle dieses Polyethylen linear sein ohne lange Kettenspaltungen. Das andere Polyethylen soll eine Dichte von 0.94 g/cm³ oder mehr besitzen. Die Polymermischung wiederum solle Insbesondere für Filmherstellungen, und zwar Blasfilmherstellungen beziehungsweise gegossene Filmherstellungen geeignet sein. Dass diese Polymermischung zur Vliesherstellung genutzt werden kann, geht aus der WO 01/98409 nicht hervor. Vielmehr werden ausschließliGh Filmanwandungen und Herstellungswelsen verschiedener Filme und Fümlaminate beschrieben.

Aufgabe der vorliegenden Erfindung ist es, ein Vlies, eine Vliesfaser beziehungsweise eine Polymermischung zur Herstellung von Vliesfasern zu schaffen, die insbesondere geeignet für einen Laminierprozess unter Hitzeinwirkung sind.

Diese Aufgabe wird mit einem Vlies mit den Merkmalen des Anspruches 1, mit einer Vliesfaser mit den Merkmalen des Anspruches 7 sowie einer Verwendung mit den Merkmalen des Anspruches 12 gelöst. Weitere vorteilhafte Ausgestaltungen und Welterbildungen sind aus den jeweiligen Unteransprüchen zu entnehmen.

Es wird ein Vlies mit einer Vliesfasern vorgeschlagen, welche eine Polymermischung aufweist, die als Basispolymer ein Polyethylen mit einem MFI zwischen 15 und 35, vorzugsweise zwischen 15 und 20 g/10 min. nach ISO 1133 und einer Dichte von 0,935 bis 0,965 g/cm³ nach ASTM D-792 hat und die zumindest als zweites Polymer ein LLDPE mit einer Dichte zwischen 0,85 und 0,90 g/cm³ nach ASTM D-762 aufweist, wobei das Basispolymer zumindest 80 Gew-% der Polymermischung ausmacht.

Vorzugsweise ist das Vlies ausschließlich aus einer derartigen Vliesfaser hergestellt. Vorzugsweise weist das Vlies die Vliesfasern in Form eines sogenannten Spinnvlieses auf. Zur Herstellung kann hierzu eine REICOFIL 3- wie auch eine REICOFIL 4-Anlage genutzt werden. Aber auch andere Herstellungsverfahren sind möglich. So kann beispielsweise das Vlies ein kardiertes Vlies sein beziehungsweise ein nach einem als Meit-Blown-Verfahren hergestelltes Vlies sein.

Die Vliesfeser weist vorzugsweise ausschließlich das Basispolymer sowie das zweite Polymer als Polymerbestandteile auf. Des Weiteren kann die Polymermischung noch Additive, beispielsweise Antioxidantien. Flammhemmer, Farbpigmente, UV-Stabllisierer, oder sonstige Zusätze aufweisen, mittels denen eine Eigenschaft des aus der Polymermischung herzustellenden Vlieses beziehungsweise Vliesfaser eingestellt werden soll. Gemäß einer Weiterbildung ist vorgesehen, dass das Basispolymer zumindest 80 Gew.-% der Polymermischung ausmacht, während das zweite Polymer einen Gewichtsanteil bis zum 20 Gew.-% der Polymermischung ausmacht. Eine weitere Ausgestaltung sieht vor, dass das zweite Polymer ein Polyolefin mit einem MFI von 3 bis 7 g/10 min nach ISO 1133 ist und vorzugsweise einen Schmelzpunkt in einem Bereich von 50°C bis 100°C, vorzugsweise von 50°C bis 70°C gemäß DSC-Messung aufweist. Die DSC-Messung wird gemäß DIN IN ISO 11/357-1 ausgeführt.

Weiterhin ist es bevorzugt, wenn das zweite Polymer ein Ethylen/Alpha-Olefin-Copolymer ist. Als Alpha-Olefin kann insbesondere eingesetzt werden: 1-Propen, 1-Buten, 1-Penten, 1-Hexen, 1-Hepten, 1-Octen, 1-Decen, 1-Dodecen, 1-Hexadecen, 4-Methyl-1-Penten, 3-Methyl-1-Penten, 3-Methyl-1-Buten und/oder 3-Ethyl-1-Penten; Vinylcyclohexan wie auch Terpolymere sind ebenfalls einsetzbar.

Des Weiteren ist es bevorzugt, wenn die Polymermischung aus Polyethylenhomo- und/oder Polyethylen-Copolymeren besteht. Auch hierbei sind Terpolymere einsetzbar.

Eine Ausgestaltung einer vorgeschlagenen Polymermischung sieht beispielsweise die Verwendung eines unter der Herstellerbezeichnung "ASPUN 6834" der Firma Dow hergestelltes Polyethylen als Basispolymer vor. Dieses weist einen MFI von 17 g/10 min gemäß ISO 1133 bei einer Dichte von 0,95 g/cm³ gemäß ASTM D-792 und einen Schmelzpunkt von 130°C gemäß DSC-Messung auf. Dieses Material wird seitens des Herstellers als für die Herstellung von Vliesfasern geeignet verkauft. Ein weiteres als Basispolymer einsetzbares Polyethylen ist das von der Firma Dow unter der Herstellerbezeichnung "ASPUN 6834A" verkaufte Polyethylen. Dieses weist eine Dichte von 0,955 g/cm³ nach ASTM D.792, einen MFI von 30 nach ASTM D-1238 sowie einen DSC-Schmelzpunkt von 131 °C auf.

Als zweites Polymer zur Herstellung der Polymermischung wird das vom gleichen Hersteller DOW vertriebene "Affinity EG 8200" beispielsweise genutzt. Hierbei handelt es sich um ein nach Aussage der Herstellerfirma mittels eines INSITE-Katalysators hergestelltes Polyolefinplastomer, das genutzt werden soll, um gefüllte Bodenbeläge herzustellen wie auch als Viskositätveränderer in kalandrierten Schaumlagen. Eine Anwendung für Vliesfasern ist hingegen für dieses Material nicht bekannt. Das unter dem Herstellernamen "Affinity EG 8200" vertriebene Polymer weist einen MFI von 5 g/10 min gemäß ISO 1133, eine Dichte von 0,870 g/cm³ gemäß ASTM D-792, einen Schmelzpunkt von 60°C gemäß DSC-Messung und einen Vicaterweichungspunkt von 45°C gemäß ISO 306 (Methodik A) auf.

Der Einfluss des zweiten Polymers bei der Polymermischung zur Erhöhung einer Dehnungseigenschaft wird anhand der nachfolgenden Tabelle 1 verdeutlicht. Hierbei sind auswahlmäßig zwei verschiedene Vliesgewichte, 35 g/m² und 60 g/m², mit verschiedenen Zumengungen des zweiten Polymers zum Basispolymer hinsichtlich der Änderungen der Eigenschaften untersucht worden. Es wird darauf hingewiesen, dass die aus diesen Tabellen hervorgehenden jeweiligen Werte weder beschränkend auszulegen sind, sondern vielmehr exemplarisch heranzuziehen sind. Sie können als Grenzen jeweils genutzt werden, um verschiedene Bereiche zu formulieren. Die an diesen exemplarisch angegebenen Vliesen festgestellten Werte sind jedoch auch bei anderen Vliesgewichten wie auch bei Zwischenwerten der Zumischung an zweiten Polymer zum Basispolymer nachweisbar.

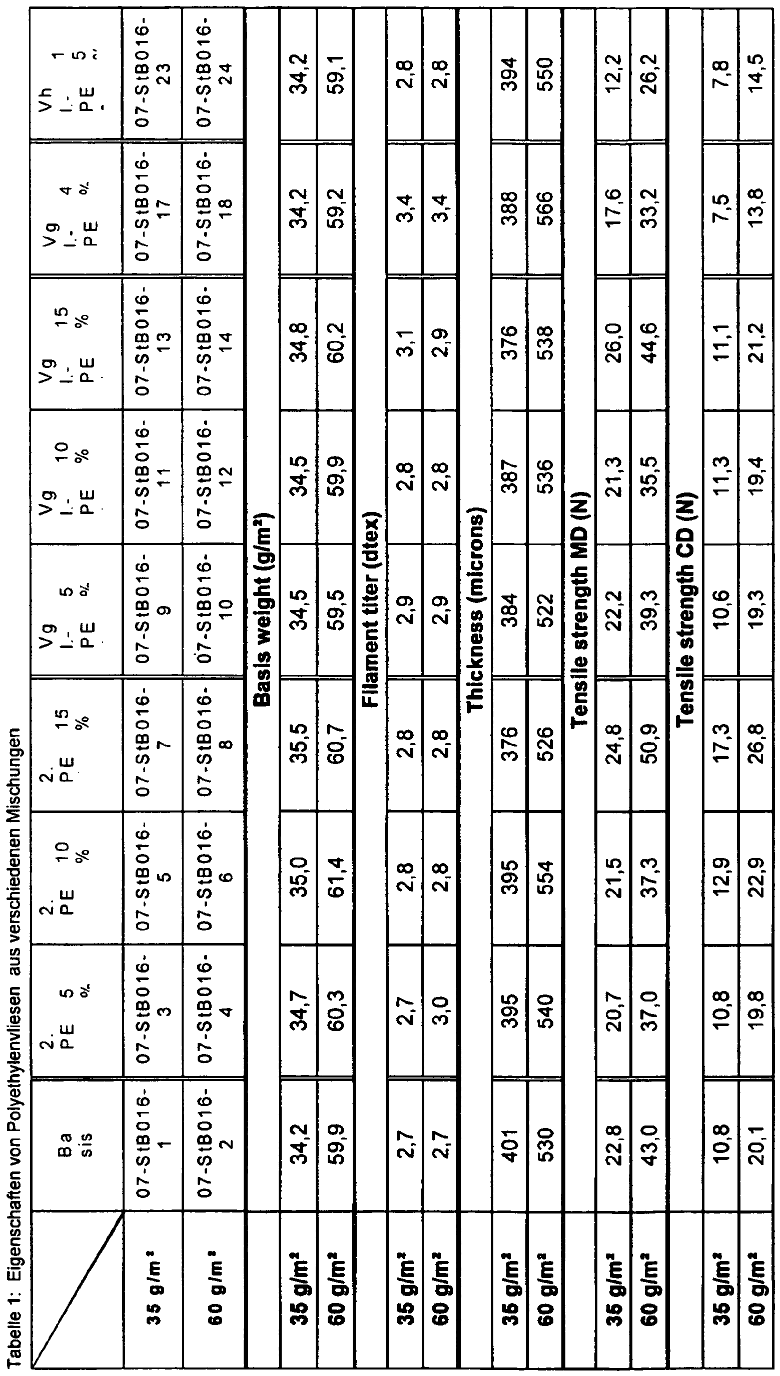

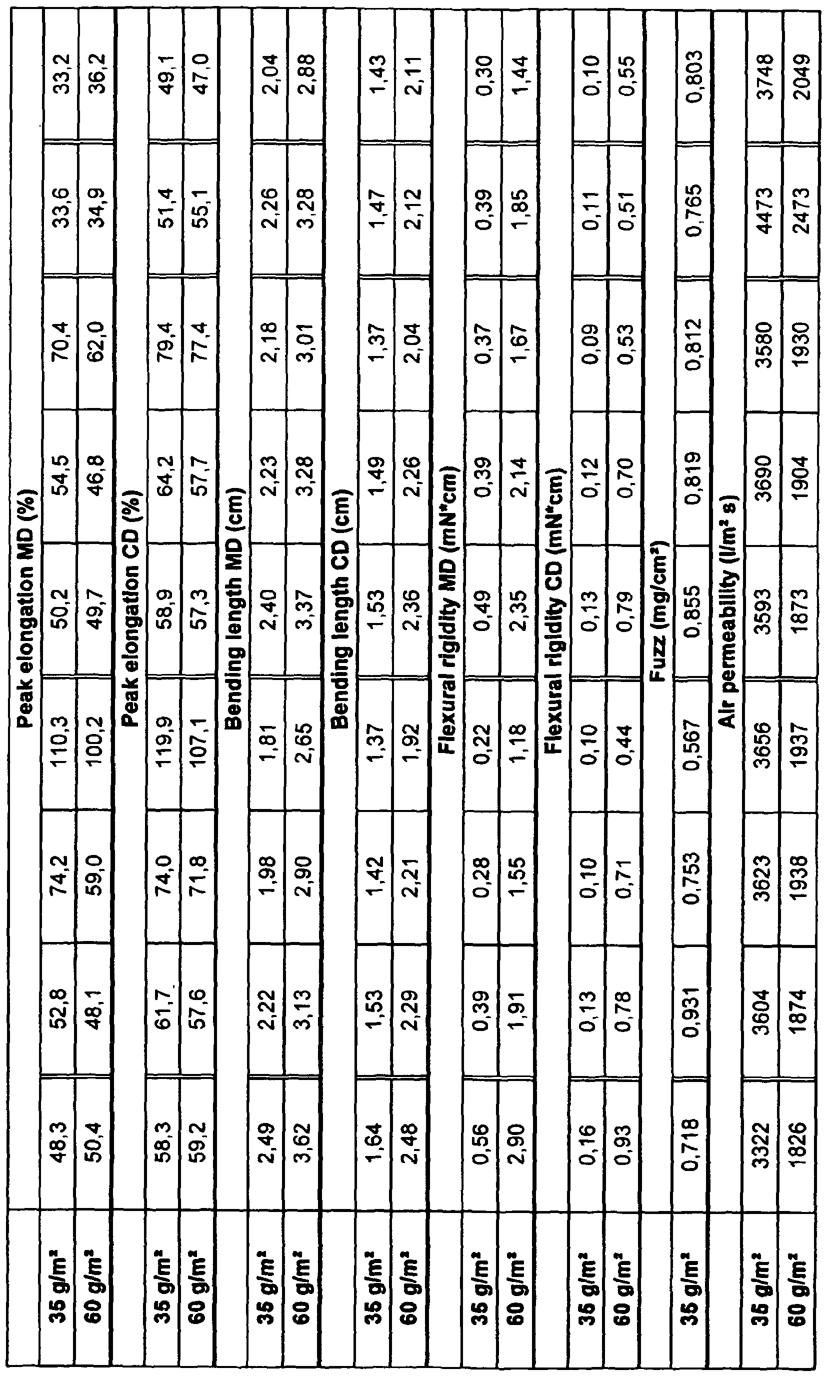

In der Tabelle 1 gibt die erste Spalte die verwendete Vliesgewichtsgrammatur an, die zweite Spalte charakterisiert die Werte gemessen an einem Vlies hergestellt ausschließlich aus einem Basispolymer, die zweite Spalte die Zugabe von 5 Gew.-%, die dritte Spalte die Zugabe von 10 Gew.-% und die vierte Spalte die Zugabe von 15 Gew.-% an zweitem Polyethylen zum Basispolyethylen. Die ersten vier Spalten auf der linken Seite geben somit einen Überblick über das Verhalten des vorgeschlagenen Polymergemischs bei der Anwendung zur Herstellung eines Vlieses im Vergleich zum Basispolymer. Das Vlies ist im übrigen ein Spinnvlies und wurde thermobondiert mit einer Kalandereinheit.Auf der rechten Seite der Tabelle 1 sind weitere verschiedne Vergleichsmischungen untersucht worden, nachdem diese ebenfalls unter den gleichen Herstellungsbedingungen zu Spinnvliesen verarbeitet wurden. Die sechste Spalte gibt an, dass als ein anderes Polyethylen zugegeben wurde, und zwar mit 5 Gew.-% zum gleichen Basispolymer. Die siebte und achte Spalte geben die Ergebnisse wieder für eine Zumengung von 10 und 15 Gew.-% zum Basispolymer. Auffallend ist insbesondere die Steigerung des als Peak elongation in MD- und in CD-Richtung und für eine Dehnung wichtigen Wertes, der sich bei Nutzung der vorgeschlagenen Polymermischung einstellt. Ein derartiger Wert lässt sich auch nicht durch die beiden anderen zugemengten Polymere, einmal mit 4% Gew.-% und einmal mit 15 Gew.-% jeweils zum Basispolymer zugemengt, erzielen. Die aus Tabelle 1 hervorgehenden Werte sind im übrigen gemessen gemäß der für Vliese üblichen Meßmethodiken, wie sie beispielsweise durch Edana vorgeschlagen sind.

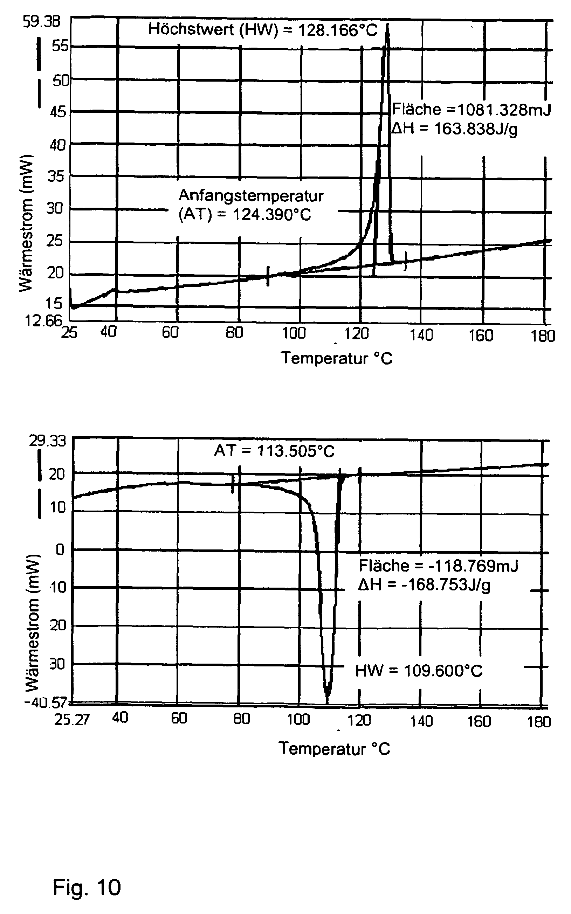

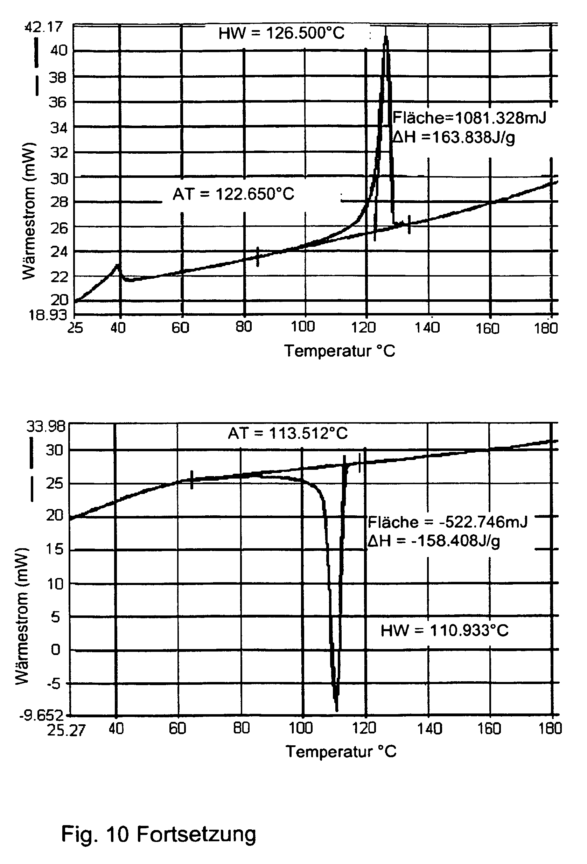

Ein Einfluss der Zugabe des zweiten Polymers bei der Polymermischung zum Basispolymer wird anhand der nachfolgenden Darstellung von Fig. 10 von Temperaturmessungen gemäß DSC-Kurven ebenfalls verdeutlicht.

Aus dieser Darstellung 1 aus Fig. 10 ist im oberen Bereich links die erste Erhitzung und rechts die Abkühlungskurve aufgetragen. Gleiches ist auch im unteren Bereich so der Fall. Während die oberen beiden Darstellungen das Basispolymer alleine wiedergeben, finden sich beim unteren Teil des Diagramms neben dem Basispolymer 10% des zweiten Polymers zugemischt anbei.

Die verschiedenen wesentlichen thermischen Eigenschaften der unterschiedlichen Filamente mit verschiedenem zweiten Polymer gehen aus der Tabelle 2 hervor:

**Tabelle 2: Thermische Eigenschaften von Polyethylen Filamenten aus verschiedenen Mischungen**

| | **1st Heat** | | | **Cooling** | | | **2nd Heat** | | |
|---|---|---|---|---|---|---|---|---|---|
| | **Peak** | **Onset** | **Delta H** | **Peak** | **Onset** | **Delta H** | **Peak** | **Onset** | **Delta H** |
| | **°*C*** | **°*C*** | ***J*/*g*** | **°*C*** | **°*C*** | ***J*/*g*** | **°*C*** | **°*C*** | ***J*/*g*** |
| Basispolymer | 128,2 | 124,4 | 163,8 | 109,6 | 113,5 | -168,8 | 127,9 | 123,0 | 182,1 |
| BP + 10% Affinity EG8200 | 126,5 | 122,7 | 143,5 | 110,9 | 113,5 | -158,4 | 126,9 | 123,2 | 161,5 |
| BP + 10% VGL.-P2 | 127,3 | 123,5 | 152,0 | 109,3 | 113,3 | -166,9 | 128,0 | 122,5 | 163,8 |
| **Vergleichspolymer 1** | 122,7 | 112,2 | 109,8 | 103,3 | 107,2 | -113,2 | 120,4 | 115,8 | 123,2 |
| Affinity EG 8200 | 67,7 | 54,8 | 5,8 | no peak | | | 68,0 | 54,8 | 6,2 |
| Vergleichspolymer 2 | 96,2 | 83,6 | 49,5 | 68,3 | 72,2 | -55,5 | 95,2 | 84,4 | 57,0 |

Wie aus der Darstellung 1 und der Tabelle 2 hervorgeht, kann eine Zumengung des zweiten Polymers ausgeführt werden, ohne dass sich dadurch die Eigenschaft des Basispolymers thermisch betrachtet wesentlich ändert. Insbesondere bedeutet dieses, dass beispielsweise die bisher für das Basispolymer bekannten Anwendungstemperaturen - zum Beispiel im Extruder oder auch in den Spinnplatten - nicht wesentlich zu ändern sind und ein bisher mit dem Basispolymer stabil laufender Herstellungsprozeß trotz Zumengung weiterhin stabil ausführbar bleibt. Wird hingegen eine Änderung einer thermischen Eigenschaft des Basispolymers wie zum Beispiel ein Schmelzpunkt, eine Erweichungstemperatur oder eine Kristallisierungstemperatur gewünscht, kann dieses durch zusätzliche Zugabe anderer Additive bzw. Polymere erzielt werden.

Auf der anderen Seite kann durch die Zugabe des zweiten Polymers zum Basispolymer eine Kristallinität geändert werden. Diese kann durch Zugabe des zweiten Polymers verringert werden. Die Kristallinität kann auf Basis des Wärmedurchgangs in Form der Enthalpie Delta H (Schmelz- oder Verfestigungs-Enthalpie) berechnet werden. Bei Zugabe von 10 Gew.-% Affinity EG8200 als zweitem Polymer zum Basispolymer wurde beispielsweise die Kristallinität um etwa 10% reduziert. Daraus folgt, dass weniger Schmelzenthalpie notwendig ist, um beispielsweise bei einem Thermobondierschritt das Vlies mit einer anderen Lage laminieren zu können.

Eine besonders bevorzugte Anwendung ergibt sich für ein aus einer derartigen Polymermischung hergestelltes Vlies bzw. Vliesfaser, wenn dieses zwischen zwei Lagen angeordnet ist und durch Hitzeinwirkung einen verklebten Verbund mit den beiden Lagen schafft. Vorzugsweise wird das Vlies beziehungsweise die Vliesfaser aus der Polymermischung als Haftvermittler zwischen zwei Lagen eingesetzt.

Ein weiterer Vorteil eines Vlieses beziehungsweise einer Vliesfaser aus einer derartigen Polymermischung ist es, dass dadurch eine Dehnungseigenschaft des Vlieses beziehungsweise der Vliesfaser vergrößert wird. Gemäß einer Ausgestaltung ist beispielsweise vorgesehen, dass ein LLDPE insbesondere wie oben beschrieben zur Anhebung einer Dehnungseigenschaft einer Vliesfaser vorzugsweise so wie oben beschrieben, eingesetzt bei einem oben beschriebenen Polyethylen als Basispolymer eingesetzt wird. Eine Weiterbildung sieht vor, dass ein Verbund mit einer ersten, einer zweiten und einer dritten Lage erstellt wird. Die zweite Lage wird zwischen der ersten und der dritten Lage angeordnet. Die Lagen werden gedehnt und einer Hitze ausgesetzt. Vorzugsweise werden die Lagen dabei auch einem Druck ausgesetzt. Die zweite Lage entwickelt hierbei zumindest zu der ersten beziehungsweise zu der zweiten Lage hin jeweils eine klebrige Eigenschaft. Auf diese Weise kann der Haftverbund zwischen der ersten und der dritten Lage geschaffen werden. Beispielsweise können auf diese Weise mehrere Lagen in eine Form gelegt, unter Druck und Hitze miteinander gedehnt, dadurch in eine Form gebracht und untereinander verbunden werden. Insbesondere besteht die Möglichkeit, dass eine Geometrie einer Vliesfaser und/oder eines derartigen Vlieses auf Basis einer derartigen Polymermischung unter Hitzewirkung sich auflöst. Wird beispielsweise ein derartiges Vlies beziehungsweise eine derartige Vliesfaser als Ersatz für die Verwendung eines Hot-Melt-Materials genutzt, kann die Druck- beziehungsweise Hitzewirkung dazu führen, dass nach deren Einwirkung nur noch die übrig gebliebene Polymermischung des Vlieses beziehungsweise der Vliesfaser vorhanden ist, hingegen das Vlies selbst beziehungsweise die Vliesfaser in ihrer Geometrie aufgelöst wurde.

Ein weiteres Anwendungsgebiet des Vlieses beziehungsweise einer Vliesfaser aus einer derartigen Polymermischung ist ein Tiefziehvorgang. Hierbei wird das Vlies in eine Tiefziehform eingebracht. Ein Stempel verfährt sodann das Lagenmaterial in die Tiefziehform und bildet dort aus dem dort dann enthaltenem Lagenmaterial einen Verbund. Die Aufgabe des verwendeten Vlieses beziehungsweise der verwendeten Vliesfasern ist es einerseits, eine Haftlage zu bilden, die benachbarte Lagen so stark aneinander haften lässt, dass eine Lösung des derartig hergestellten Verbundes nur unter Aufbringung starker Reißkräfte möglich ist. Andererseits wird die oben beschriebene Anhebung der Dehnungseigenschaft durch das zweite Poylmer auf das Basispolymer ausgenutzt. Beispielsweise kann das Vlies beziehungsweise die Vliesfaser eingesetzt werden, um einen Teppich, insbesondere einen Autoteppich, eine Abdeckung oder Sonstiges herstellen zu können.

Gemäß einer Ausgestaltung ist beispielsweise vorgesehen, dass das Vlies zwischen einer ersten Schicht aus einem ersten Polymermaterial und einer zweiten Schicht eines zweiten Polymermaterials eingelegt wird. Das erste Polymermaterial und das zweite Polymermaterial sind beide verschieden und weisen vorzugsweise unterschiedliche Erweichungs- und Schmelztemperatureigenschaften auf, die ein Miteinanderverhaften beider Polymermaterialien im Wesentlichen verhindert oder nur mit einer ungenügenden Haftung untereinander ausstattet. Beispielsweise kann vorgesehen sein, dass die erste Lage aus einem EVA besteht beziehungsweise dieses an der Oberfläche aufweist, während die zweite Lage PET aufweist beziehungsweise daraus besteht. Beispielsweise kann die zweite Lage ein Veloursteppich sein, während die erste Lage eine Schwerschicht ist. Durch Verbindung unter Druck und Hitze wird das Vlies beziehungsweise die Vliesfaser zumindest klebrig, kann sich insbesondere unter länger anhaltender Druck- und Hitzeeinwirkung auflösen und damit einen entweder vollflächigen Verbund oder einen diskontinuierlichen Verbund zwischen den beiden Lagen schaffen.

Ein weiterer Anwendungsbereich für das Vlies bzw. die Vliesfaser betrifft beispielsweise die Herstellung von Akustikbauteilen, wie sie zum Beispiel in Fahrzeugen Verwendung finden können. Sie können aber auch in anderen Bereichen eingesetzt werden, beispielsweise zur Schalldämmung oder aber zur gezielten klangtechnischen Formung von Räumen, wie beispielsweise Opernräumen, Theaterräumen, Kinosälen oder ähnlichen Veranstaltungsräumen. Es können jedoch auch Wohnzimmer oder sonstige akustisch zu gestaltende Räume mit einem derartigen Material belegt werden. Beispielsweise wird hierfür ein Nadelvlies genutzt, vorzugsweise ein Nadelvlies, welches zwischen 40 bis 150 g/m² schwer ist. Auf einer Rückseite des Nadelvlieses wird das Vlies genutzt, um das Nadelvlies beispielsweise mit einem Akustikschaum oder einem sonstigen Dämpfungsmaterial verbinden zu können. Dieses kann beispielsweise auch ein sogenanntes Reißvlies sein, welches aus zerschredderten Altkleidern herstellt wird.

Ein Vlies, welches mit dem vorgeschlagenen Polymergemisch hergestellt wird, wird beispielsweise durch Anwendung von Druck und Hitze thermisch bondiert. Beispielsweise kann dieses mittels eines Kalandrierungsvorgangs erfolgen. Ein Beispiel hierzu geht aus der US 3,855,046 hervor. Anstelle eines Thermobondierens besteht die Möglichkeit, dass das Vlies auch mittels Wasserstrahlverfestigung eine Festigkeit erhält. Diesbezüglich wird beispielsweise auf die US 4,021,284 wie auch 4,024,612 verwiesen. Um dem Vlies eine Vorverstreckung aufprägen zu können, kann beispielsweise ein Verstrecken des Vlieses in MD-Richtung wie auch in CD-Richtung erfolgen. Die MD-Richtung stellt hierbei die Maschinenrichtung und die CD-Richtung die Querrichtung hierzu dar. Ein Verstrecken kann gleichzeitig in beide Richtungen oder zeitlich nacheinander erfolgen. Ausgestaltungen von Vorrichtungen hierfür gehen beispielsweise aus der US 4,116,892, der US 4,834,741, der US 5,143,679, der US 5,156,793, der US 5,167,897, der US 5,422,172 wie auch der US 5,518,801 hervor.

Das Vlies wird vorzugsweise als alleinige Lage hergestellt und weiter vertrieben. Es besteht jedoch ebenfalls die Möglichkeit, dass das Vlies als Laminat hergestellt wird mit zumindest einer weiteren Lage. Diese Lage kann ebenfalls ein Vlies sein. Es kann jedoch ebenfalls ein Film genutzt werden. Die Lagen können miteinander thermisch bondiert, verklebt oder durch sonstige geeignete Mittel miteinander verbunden sein. Beispielsweise können Spraykleber, so genannte Hot-Melt-Kleber, latexbasierte Kleber oder sonstige Kleber eingesetzt werden. Des Weiteren kann ein Verbindungsvorgang mittels Ultraschallverschweißen wie auch durch Wasserstrahlen erfolgen. Beispielsweise geht dieses aus der WO 02/055778 A1 hervor. Des Weiteren besteht die Möglichkeit einer Vernadelung von Lagen miteinander. Auch können verschiedene Lagen aufeinander gebracht und miteinander verbunden werden, während zumindest eine der Lagen sich noch in einem klebfähigen Zustand befindet. Verschiedene Verfahren wie auch Vorrichtungen zum Laminieren gehen beispielsweise aus der US 6,013,151 wie auch aus der US 5,932,497 hervor.

Das Polymergemisch kann beispielsweise erst in einem Extruder selbst gebildet werden, wobei hierzu der Extruder einen ersten und einen zweiten Zulauf für jeweils ein Polymer aufweist. Auch können darüber weitere Additive und Zugaben dem Polymergemisch zugeführt werden. Beispielsweise kann auch ein Doppelschneckenextruder Verwendung finden, um das Polymergemisch dann herzustellen, wenn es zur Herstellung von Vliesfasern benötigt wird. Eine weitere Ausgestaltung sieht vor, dass das Polymergemisch als Batch vorgefertigt und so dem Extruder zugeführt wird.

Des Weiteren besteht die Möglichkeit, mittels der vorgeschlagenen Polymermischung ein besonders weiches Vlies herzustellen. Beispielsweise kann hierzu ein Herstellungsprozess genutzt werden, wie er aus der WO 02/312 45 A2 hervorgeht. Des Weiteren kann das Vlies auch derartig hergestellt werden, dass es thermisch reversible und thermisch nicht reversible Bindungen aufweist. Hierzu wird beispielsweise auf die US 20050037194 A verwiesen.

Des Weiteren besteht die Möglichkeit, dass die Polymermischung genutzt wird, um damit ein SM- oder SMS-Material herzustellen, wie es beispielsweise aus der US 5,178,931 oder der US 5,188,885 hervorgeht, wobei ein so genanntes Melt-Blown-Material gemäß der US 3,704,198 beziehungsweise US 3,849,241 hergestellt werden kann.

Des Weiteren besteht die Möglichkeit, eine Bikomponentenfaser herzustellen, die das Primärgemisch aufweist. Die Bikomponentenfaser kann hierbei eine Kern-Mantel-Struktur oder eine sonstige Struktur mit voneinander abgrenzbaren Bereichen verschiedener Polymere beziehungsweise Polymergemische aufweisen.

Das Vlies bzw. die Vliesfaser kann auch als Vlies-Film-Laminat genutzt werden. Der Film kann beispielsweise ein- oder mehrlagig sein, wobei vorzugsweise eine dem Vlies zugewandte Seite des Films ein Polyethylen aufweist. Dadurch wird eine besonders sichere Verbindung zwischen den beiden Außenseiten des Films und des Vlieses geschaffen. Aus der DE 10 2005 048 443 gehen verschiedene Anwendung und Beispiele derartiger Laminate wie auch Angaben hinsichtlich der möglichen Herstellungsweisen hervor. Auch wird auf verschiedene vorteilhaft einzusetzende Additive verweisen. Eine Verbindung zwischen Film und Vlies kann auch durch elektrostatische Aufladung unterstütz werden. Eine Herstellungsvorrichtung zur Herstellung eines Spinnvliese geht zum Beispiel aus der WO 05/040474 A1 hervor. Bei dieser Vorrichtung wird die Vliesablage dadurch unterstützt, dass eine elektrostatische Aufladung mitgenutzt wird, zusätzlich zur Wirkung eines Diffusors. Ein anderes Herstellungsverfahren zur Herstellung von Spinnvliesfilamenten und einem daraus hersgetellten Vlies ist aus der WO 04/020722 A2 zu entnehmen.

Das Vlies lässt sich aufgrund seiner Beschaffenheit in unterschiedlichsten Anwendungen einsetzen, die hier nur exemplarisch ohne Anspruch auf Vollständigkeit wiedergegeben werden: im medizinischen Bereich, beispielsweise bei einem Stoma-Bag, bei Abdeckungen, Kitteln, Gesichtsmasken, bei Damen- und Baby-Hygiene-Artikeln, beispielsweise als "Backsheet" oder auch als "Topsheet", welches beispielsweise auch einen Auftrag aufweisen kann, bei Windeln, bei Binden, bei Inkontinenz-Artikeln, als Bedruckungsauflage, als Schutzoberfläche, als Verpackungsmaterial, als Separator, als dampfdurchlässiges aber wasserdichtes Material, als Haftmaterial beispielsweise in der Verwendung von Mikroschlaufen und Verhakungsmitteln, beispielsweise durch Zur-Verfügung-Stellung von Gebieten mit Schlaufen durch entsprechende Prägung des Vlieses, als Befestigungsmaterial bei Verschlusssystemen, als Kontaktfläche für ein Klebemittel, als Kontaktmittel zwischen zwei Oberflächen beispielsweise einem Bett und einer Bettauflage, als Teil eines Wandbehanges oder Tapete oder Flurmaterials, als Reinigungs- oder Poliermittel, in Schutzbekleidung beispielsweise bei einem Overall, bei hautnahen Anwendungen. Als Öl- und/oder Schmierfettaufnehmer und/oder Reinigungsmittel, in Sportbekleidung, Sportaccessoires und/oder Sportgeräten bzw. Schuhen, in Bekleidung wie beispielsweise in Handschuhen, in Jacken, oder ähnlichem, als Verpackung beispielsweise bei Flaschen, in CD-Hüllen, als Ummantelung, als Dekoration, im Automobilbereich, im Armaturenbereich, als Verkleidungsmaterial zur Umhüllung eines Gegenstandes, als Beschichtung, in Dachmaterialien, als Dachunterspannbahn oder Bestandteil davon, als Housewrap, als Baumaterial, als Unterspann- oder Unterdeckschalungsbahn, als Wandabdeckung, bei Neubauten, bei einer Sanierung, einer Umdeckung, im Dachausbau, als Wasser-, Dampf- oder Luftsperre bzw. als Fassadenbahn, ein- oder mehrlagig einsetzbar, als Streifen, zum Beispiel spezifische Abdeckungen, beispielsweise im Dachbereich, erzielen zu können oder um als Träger eines Substrats zu dienen, als Bestandteil eines Teppichs oder eines anderen Bodenbelags, als Geräusch- und/oder Wärmeisolierung, als Filtermittel, als Sedimentationsmittel, als Identifikationsmittel beispielsweise als Eincremetuch, als Einlagerungsmittel von Substanzen, die später bei Gebrauch langsam oder schlagartig freigesetzt werden, beispielsweise durch Diffusionsfreigabe, als Brillenputztuch, als Beladungsmaterial für Körner und/oder Pulver, als Zwischenlage in einem Hygieneartikel, im Sanitärbereich, z.B. in einem Handtuch, in einer Badekappe, als Drainagemittel, als Farbmarkierung, als Signalmarkierung, als Schonbezug, als Wundabdeckmaterial, in Elastikbinden, als Zigarettenfilter, als Oberflächematerial in einem Wegwerf- oder Einmalartikel, als Abdeckmaterial bei Streich-, Beschichtungs- oder anderen Arbeiten, zur Züchtung von Zellkulturen, bei elastischen Materialien, beispielsweise bei Hygieneartikeln als sogenannte "sidebands" (Seitenabschlüsse), "wastebands" und/oder auch elastische Verschlüsse, in Saugpads, wie auch in anderen Anwendungen.

Die verschiedenen Anwendungen bedürfen auch verschiedener Additive, damit das Vlies und/oder das Vlies enthaltene Laminat diejenige Eigenschaften zur Verfügung stellt, die für den jeweiligen Einsatzzweck notwendig sind. So können zum Beispiel des Weiteren ein UV-Stabilisierer zugemischt werden. Vorzugsweise wird hierbei ein Gewichtsanteil von zumindest 1 Gew.-% bis 5 Gew.-% UV-Stabilisierer zugegeben. Bevorzugt wird ein UV-Stabilisator mit der CAS-Nr. 193098-40-7 und/oder 067845-93-6 verwendet. Beispielsweise kann als UV-Stabilisierer ein UV-Absorber, ein HALS-Stabilisator und/oder ein so genannter Quencher ausgenutzt werden. Ein UV-Absorber filtert das ultraviolette Wellenspektrum aus dem Licht. Dabei wird die Energie des zu absorbierenden Lichts in Wärme umgewandelt. Eine Stärke einer UV-Absorption hängt von einer Wirkstoffkonzentration und einer Wandstärke des Endprodukts ab. Als UV-Absorber können Benzophene, Triazole wie auch Trazine eingesetzt werden. Als HALS-Stabilisatoren (hindered amine-lightstabilisator) werden solche Additive eingesetzt, die eine Reaktion aggressiver Photooxidationsprodukte, insbesondere von Radikalen und Peroxiden unterbinden. Durch Einstellung einer Wirkstoffkonzentration kann eine Produkt-Lebensdauer des Vlieses und/oder des Lamiants eingestellt werden. HALS-Stabilisatoren können beispielsweise polymere HALS, oligomere HALS, NOR-HALS und/oder substituierte HALS sein. Ein Quencher deaktiviert Radikale und leitet Energie letztlich in Form von Wärme ab. Beispielsweise ist es bekannt, dass Nickel als ein derartiger Quencher einsetzbar ist. Neben diesen UV-Stabilisatoren kann vorzugsweise zusätzlich eine Ausrüstung mit Thermostabilisatoren erfolgen. Thermostabilisatoren sind vorzugsweise Antioxidantien, die das verwendete Polyethylen wie aber auch den UV-Stabilisator schon bei der Verarbeitung schützen können. Vorzugsweise sind die Thermostabilisatoren wie auch die UV-Stabilisatoren in Form eines Masterbatches dem Polymer beigefügt. Als Thermostabilisatoren sind beispielsweise Phenole oder Phosphite eingesetzt.

Weiterhin wird im Umfang der Offenbarung auf UV-Stabilisatoren verwiesen, wie sie aus der US 6,100,208 hervorgehen, ebenso auf die dortigen Polymermischungen mit darauf abgestimmten UV-Stabilisatoren und jeweiligen Gewichten und Pigmenten für Vliesfasern. Diese Offenbarung wird in diese Beschreibung mit aufgenommen.

Eine weitere Erhöhung der UV-Stabilisierung ergibt sich dadurch, dass ein Titandioxidanteil in einem Polymer erhöht wird. Beispielsweise kann hierzu vorgesehen werden, dass ein Titandioxidanteil von mehr als 5 Gew.-% einer Vliesfaser vorgesehen ist. Vorzugsweise weist die erste Lage eine Vliesfaser mit einem derartigen Anteil an Titandioxid auf. Eine weitere Erhöhung einer UV-Stabilisierung ergibt sich bei Verwendung eines Reflektionsmittels in zumindest einer der Lagen des Laminats. Hierzu kann beispielsweise eine Metallbedampfung, eine Metallbeschichtung und/oder eine Metallschicht vorgesehen sein, insbesondere in Form einer Folie, die in das Laminat mit eingearbeitet wird. Eine weitere Ausgestaltung sieht vor, dass Metallpartikel zumindest an einer Oberfläche vorgesehen sind, die eine stark reflektierende Eigenschaft aufweisen. Eine zusätzliche Erhöhung einer UV-Stabilisierung ergibt sich bei Verwendung von Russpartikeln insbesondere in Verbindung mit Polyethylen. Durch die Rußpartikel im Polyethylenmaterial selbst wird das Polyethylen geringer anfällig gegenüber UV-Strahlen.

Des weiteren besteht die Möglichkeit, dass das Vlies elektrostatisch aufgeladen wird, beispielsweise durch Additivierung. Auch kann das Vlies las elektrischer Isolator oder aber als elektrischer Leiter genutzt werden, zum Beispiel durch Zugabe eines elektrisch leitfähigen Stoffes. Auch kann das Vlies im Filterbereich, insbesondere im Innenfilterbereich eingesetzt werden, zum Beispiel als eine Lage von mehreren, zum Abscheiden beispielsweise von Grobpartikeln und/oder zum Verbinden verschiedener Lagen.

Weitere vorteilhafte Ausgestaltungen und Merkmale werden anhand der nachfolgenden Figuren jeweils näher erläutert. Die dort dargestellten Bespiele sind jedoch nicht beschränkend auszulegen, sondern beispielhaft. Die nachfolgend beschriebenen Merkmale sind jeweils auch mit Merkmalen aus den anderen Figuren sowie mit Merkmalen der oben beschriebenen Offenbarung zu weiteren Ausgestaltungen verknüpfbar. Es zeigen:
Fig. 1 Ein erstes Spinnsystem, welches nach einem ersten Verfahren zur Herstellung eines Spinnvlieses arbeitet,
Fig. 2 eine zweite Vorrichtung zur Herstellung eines Spinnvlieses,
Fig. 3 ein Tiefziehvorgang unter Nutzung des Vlieses als Verbundlage
Fig. 4 einen Ausschnitt aus einem ersten Produkt,
Fig. 5 einen weiteren Ausschnitt aus einem zweiten Produkt,
Fig. 6 einen Querschnitt durch eine Vliesfaser,
Fig. 7, Fig. 8 und Fig. 9 jeweils einen Querschnitt durch eine Bikomponentenfaser, und
Fig. 10 eine Darstellung 1 mit Temperaturmessung gemäß DSC-Kurven.

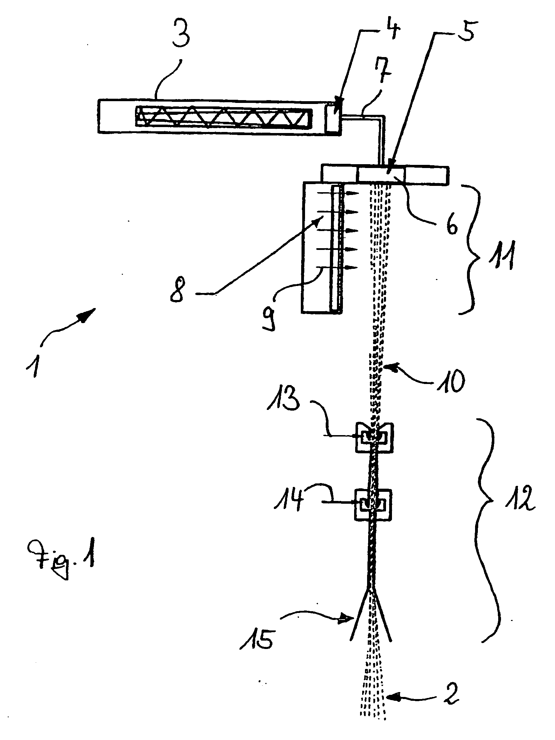

Fig. 1 zeigt eine erste Vorrichtung 1 zur Herstellung von vorgeschlagenen Vliesfasern 2. Über einen Extruder 3 wird beispielsweise ein Polymergemisch als Batch zugeführt, aufgeschmolzen und durch einen Extruderkopf 4 einem Spinnpaket 5 zugeführt. Der Extruderkopf 4 wie auch das Spinnpaket 5 sind jeweils getrennt voneinander beheizbar. Im Spinnpaket 5 ist eine Spinnplatte 6 angeordnet. Durch die Spinnplatte 6 wird das vom Extruder kommende Polymer 7 hindurchgedrückt. Nach Austritt aus der Spinnplatte 6 wird das Polymer 7 in einzelne Fäden weitergeführt und über eine Quencheinrichtung 8 abgekühlt und verstreckt. Die Quencheinrichtung sieht vor, dass ein Quenchmedium 9, welches durch die Pfeile angedeutet ist, die aus der Spinnplatte 6 abgezogenen Polymerfäden 10 abkühlt. Nach Durchschreiten dieses einteiligen Quenchabschnitts 11 werden die Polymerfäden 10 in einen Spaltbereich 12 geführt. Im Spaltbereich 12 wird zuerst zur Beschleunigung ein Treibmedium 13 zugeführt. Hierbei kann es sich insbesondere um Treibluft handeln. Beabstandet davon wird ein Spreizmedium 14 zugeführt, welches dazu dient, die Polymerfäden 10 in einem anschliessenden Diffusorbereich 15 aufzuspreizen. Eine Aufspreizung kann auch durch eine elektrische Aufladung zusätzlich unterstützt werden. Die verstreckten und aufgespreizten Vliesfasern 16 können sodann auf einer nicht näher dargestellten Ablageeinrichtung abgelegt und weiterverarbeitet werden. Mit der dargestellten Vorrichtung und ausgewählten Parametern ist es möglich, ein Vlies herzustellen, wie es oben beschrieben worden ist. Hierzu wird der ersten Vorrichtung 1 eine Bondierungseinrichtung, insbesondere eine Kalandereinrichtung nachgeschaltet, so dass in einem Ablauf von der Polymeraufschmelze, der Weiterverarbeitung zu Vliesfasern bis zum Verfestigen durch die Kalandereinrichtung das Vlies ohne zusätzliche Schritte herstellbar ist.

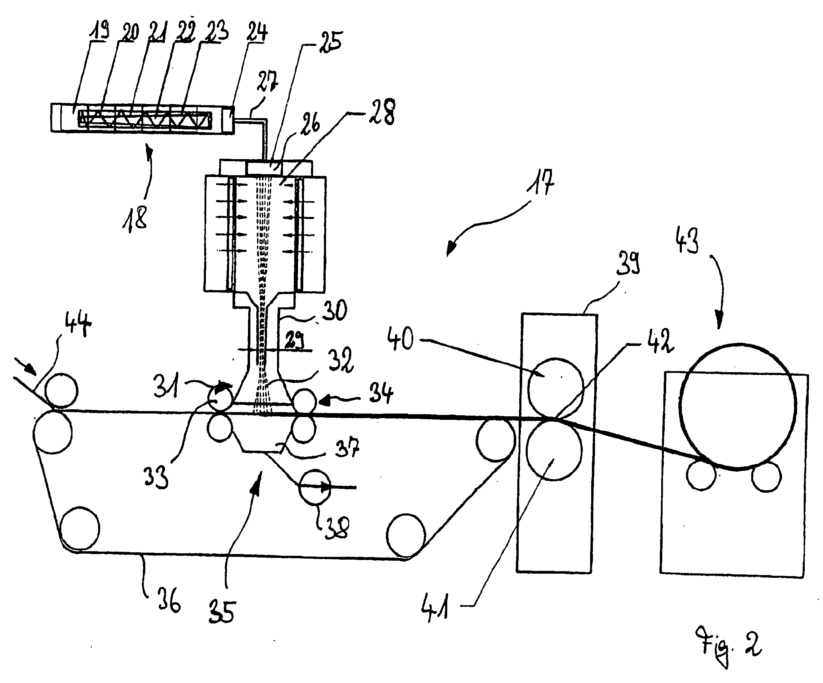

Fig. 2 zeigt eine zweite Vorrichtung 17, die einen Extruder 18 aufweist. Der Extruder 18 hat einen ersten Abschnitt 19, einen zweiten Abschnitt 20, einen dritten Abschnitt 21, einen vierten Abschnitt 22 und einen fünften Abschnitt 23. Die Abschnitte 19 bis 23 sind jeweils unterschiedlich beheizbar. Weiterhin weist der Extruder 18 einen beheizten Extruderkopf 24 auf. Über den Extruderkopf wird das aufgeschmolzene Polymer unter konditionierten Bedingungen zum Spinnpaket 25 geführt. Über das Spinnpaket 25 und über die im Spinnpaket 25 enthaltene Spinnplatte 26 wird das unter Druck stehende Polymer 27 in eine Kammer 28 eingeführt. Die Kammer 28 weist ein dem Spinnpaket 25 gegenüber angeordneten Ausgang auf. Der Ausgang kann insbesondere spaltförmig so wie dargestellt ausgebildet sein. Insbesondere kann eine Spaltbreite 29 einstellbar verändert werden. Der Ausgang 28 mündet vorzugsweise in eine Umhausung 30, die vorzugsweise einen Diffusorbereich 31 aufweist. Der Diffusorbereich 31 erlaubt ein Aufspreizen der Vliesfasern 32, wenn diese abgelegt werden. Dem Diffusorbereich 31 vor- oder auch nachgelagert kann eine elektrostatische Aufladung vorgesehen sein. Diese kann auch in den Diffusorbereich integriert vorliegen und eine Aufspreizung zusätzlich unterstützen. Zum Diffusorbereich benachbart und insbesondere vorzugsweise auch abdichtend angeordnet sind ein erster 33 und ein zweiter Rollenbereich 34 angeordnet. Die Rollenbereiche 33, 34 sind vorzugsweise derart, dass eine verbesserte Absaugung eines Quenchmediums durch die Ablagevorrichtung 35 ermöglicht wird. Insbesondere kann unterhalb eines Siebbandes 36 der Ablagevorrichtung 35 eine Absaugung 37 angeordnet sein. Die Absaugung 37 kann dabei vorzugsweise mit unterschiedlichen Abzugsvolumina eingestellt werden durch Veränderung einer Absaugeinrichtung 38. Die abgelegte Vliesfasern 32 werden anschliessend über einen Kalander 39 verdichtet, insbesondere thermobondiert. Dazu weist der Kalander 39 eine Prägewalze 40 und eine Glattwalze 41 auf. Zwischen der Prägewalze 40 und der Glattwalze 41 wird ein Prägespalt 42 gebildet, wobei der darin herrschende Liniendruck einstellbar ist. Über eine anschliessende Aufwicklungsvorrichtung 43 kann das Vlies aufgewickelt und als Trommel gelagert bzw. weiterverarbeitet werden. Auf das Siebband 36 kann der zweiten Vorrichtung 17 vorgelagert beispielsweise ein nicht näher dargestellter Abwickler oder auch eine andere Lagenherstellungseinrichtung angeordnet sein. Beispielsweise kann somit in einem In-line-Prozess eine Unterlage 44 zugeführt werden, auf die das Spinnvlies abgelegt und anschliessend bondiert wird. Dieses kann ein Film, ein anderes Vlies oder auch eine andere Lage sein.

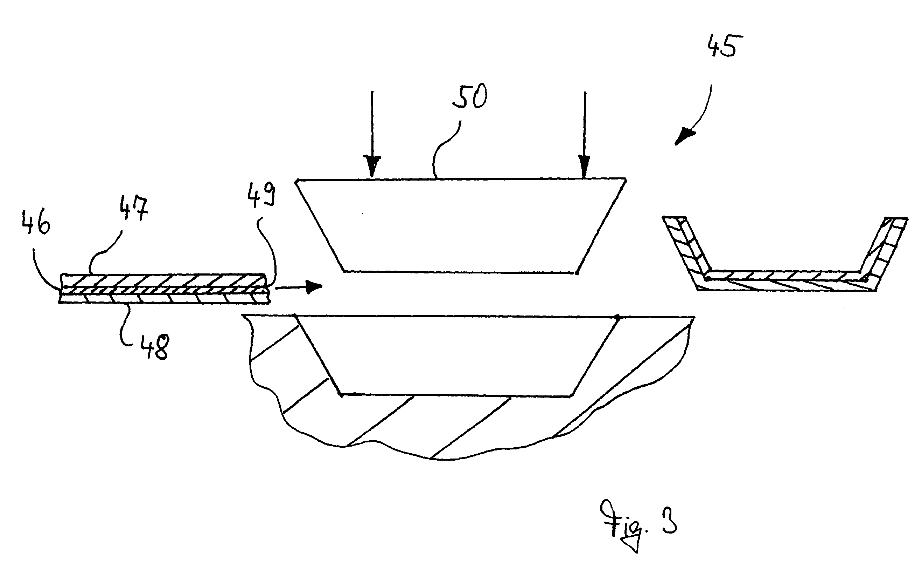

Fig. 3 zeigt in beispielhafter Ausgestaltung eine Pressvorrichtung 45, in der ein Vlies 46 bestehend aus der Polymermischung zwischen einer ersten 47 und einer dritten 48 Lage als zweite Lage 49 zwischengefügt ist. Vorzugsweise können diese drei Lagen vorher miteinander laminiert sein. Sie können jedoch auch einzeln zugeführt werden und erst durch den anschließenden Pressvorgang miteinander einen Verbund bilden, der reißfest ist. Durch Aufprägen von Hitze und Druck über einen Druckstempel 50, dessen Verfahrweg durch Pfeile angedeutet ist, kann durch Einstellung der Temperatur wie auch des Druckes selbst beeinflusst werden, ob das Vlies 46 beziehungsweise die verwendeten Vliesfasern zumindest teilweise noch erhalten bleiben oder ob sich das Vlies vollständig auflöst und einen Klebverbund zwischen der ersten und der dritten Lage schafft. Dieses ist schematisch angedeutet durch Auflösung der zweiten Lage, die aus der Pressvorrichtung in Form der schematisch angedeuteten Tiefziehvorrichtung entnommen wird. Vorteilhaft bei der Nutzung des Vlieses ist, dass bei einem Tiefziehvorgang so wie schematisch dargestellt, das Vlies 46 den beiden jeweils außen angebrachten Lagen bei der Dehnung folgen kann. Dadurch wird vermieden, dass Stellen verminderter Haftung durch Reißen des Vlieses entstehen. Vielmehr wird ein vollflächiger Klebverbund aufgrund der Dehnungseigenschaft des Vlieses ermöglicht. Das mittels des Vlieses 46 hergestellte Produkt kann im Übrigen beispielsweise für Automobilanwendungen genutzt werden, beispielsweise als Abdeckung, als thermischer Isolator oder auch als Dämpfungsmaterial. Des Weiteren kann das Vlies selbst ebenfalls Verwendung finden in Hygieneprodukten, beispielsweise als äußere Lage, die in Verbindung mit der Haut kommen kann.

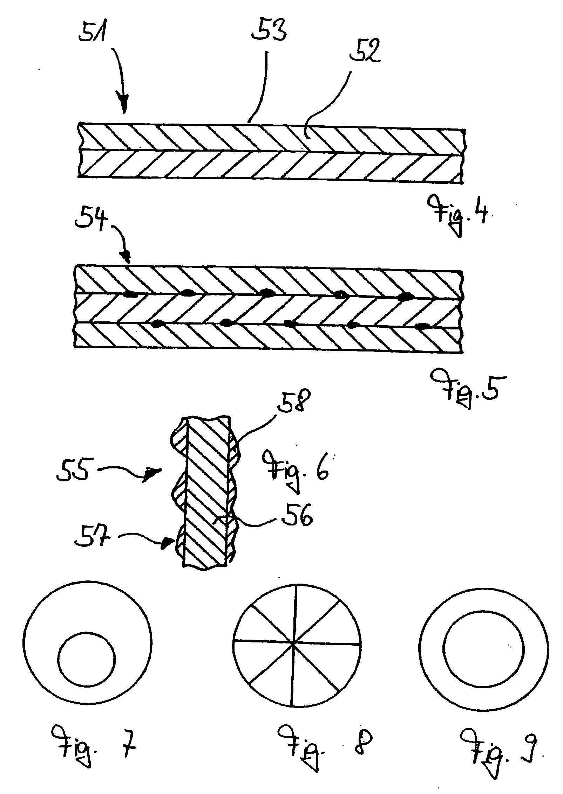

Fig. 4 zeigt einen Ausschnitt aus einem ersten Produkt 51. Das Produkt 51 weist ein vorgeschalgenes Polyethylenvlies 52 an seiner Oberfläche 53 auf. Das Produkt kann beispielsweise ein zweilagiges Material so wie dargestellt aufweisen. Dieses Laminat kann beispielsweise ein Film-Vlies-Laminat sein.

Fig. 5 zeigt einen Ausschnitt aus einem zweiten Produkt 54. Das zweite Produkt 54 ist beispielsweise ein SMS-Material, dessen Lagen untereinander thermobondiert sind. Vorzugsweise sind die Lagen in einem einzigen Arbeitsgang nicht nur miteinander sondern auch jeweils selbst verprägt worden. Zumindest eine der Spinnvlieslagen ist dabei ein vorgeschlagenes Vlies mit einer Polyethylenoberfläche.

Fig. 6 zeigt einen Querschnitt durch eine Vliesfaser 55. Sie weist einen Kern 56 auf, der vorzugsweise ein anderes Polymer, zum Beispiel ein Polypropylen enthält. Eine Oberfläche 57 der Vliesfaser weist zumindest teilweise das Polyethylengemisch auf. Das Polyethylen kann vollflächig, insbesondere mit sich ändernder Oberflächengeometrie, wie auch unterbrochen den Kern 56 als Mantel 58 überziehen. Sind Unterbrechungen vorhanden, können diese beispielsweise für eine Thermobondierung vorteilhafterweise mit einer Oxidationsschicht versehen sein.

Fig. 7, Fig. 8 und Fig. 9 zeigen jeweils unterschiedliche Querschnitte durch Bikomponentenfasern. Neben einer vollflächigen Faser aus dem vorgeschlagenen Polyethylenmaterial bietet die Bikomponentenfaser den Vorteil, durch gezielte Auswahl der anderen Polymere gewünschte Eigenschaften des Vlieses wie beispielsweise Zugfestigkeit beeinflussen zu können. Das Polyethylengemisch bildet bei den dargestellten Vliesfasern zumindest teilweise, insbesondere vollständig die Oberfläche.

Die Fig. 10 zeigt eine Darstellung 1 von Temperaturmessungen gemäß DSC-Kurven. Darstellung 1: DSC Chromatogram von Filamenten hergestellt ausschließlich aus dem Basispolyethylen (oben), und Basispolyethylen + 10 Gew.-% Affnity EG8200 (unten). Erste Aufheizung (links) und Kühlkurve (rechts)

## Patentansprüche

1. Vlies mit einer Vliesfaser, das eine Polymermischung aufweist, die als Basispolymer ein Polyethylen mit einem MFI zwischen 15 und 35, vorzugsweise zwischen 15 und 20 g/10 min nach ISO 1133 und einer Dichte von 0,935 bis 0,965 g/cm³ nach ASTM D-792 hat und die zumindest als zweites Polymer ein LLDPE mit einer Dichte zwischen 0,85 und 0,900 g/cm³ nach ASTM D-762 aufweist und wobei das Basispolymer zumindest 80 Gew-% der Polymermischung ausmacht.

2. Vlies nach Anspruch 1, **dadurch gekennzeichnet, dass** das Basispolymer zumindest 80 Gew-% der Polymermischung ausmacht, während das zweite Polymer einen Gewichtsanteil bis zu 20 Gew.-% an der Polymermischung hat.

3. Vlies nach Anspruch 1 oder 2, **dadurch gekennzeichnet**, dase das zweite Polymer ein Polyolefin mit einem MFI von 3 bis 7 g/10 min nach ISO 1133 ist und vorzugsweise einen Schmelzpunkt in einem Bereich von 50°C und 100°C, vorzugsweise von 50°C bis 70°C gemäß DSC-Messung aufweist.

4. Viles nach Anspruch 1, 2 oder 3, **dadurch gekennzeichnet, dass** das zweite Polymer ein Ethylen Alpha-Olefin Copolymer ist.

5. Vlies nach einem der vorhergehenden Ansprüche, **dadurch gekennzeichnet, dass** die Polymermischung aus Polyethylenhomo- und/oder -copolymer besteht.

6. Vlies nach einem der vorhergehenden Ansprüche, **dadurch gekennzeichnet, dass** dieses zwischen zwei Lagen angeordnet ist und durch Hitzeeinwirkung einen verklebten Verbund mit den Lagen schafft.

7. Vliesfaser aus einer Polymermischung mit einem Polyethylen als Basispolymer mit einem MFI zwischen 15 und 35, vorzugsweise 15 und 20 g/10 min nach ISO 1133 und einer Dichte von 0,935 bis 0,965 g/cm³ nach ASTM D-792 hat und aus zumindest einem zweiten Polymer in Form eines LLDPE mit einer Dichte zwischen 0,85 und 0,900 g/cm³ nach ASTM D-762 und wobei das Basispolymer zumindest 80 Gew-% der Polymermischung ausmacht.

8. Vliesfaser nach Anspruch 7, **dadurch gekennzeichnet, dass** das Basispolymer zumindest 80 Gew-% der Polymermischung ausmacht, während das zweite Polymer einen Gewichtsanteil bis zu 20 Gew.-% an der Polymermischung hat.

9. Vliesfaser nach einem der vorhergehenden Anspruche, **dadurch gekennzeichnet, dass** das zweite Polymer ein Polyolefin mit einem MFI von 3 bis 7 g/10 min nach ISO 1133 ist und vorzugsweise einen Schmelzpunkt in einem Bereich von 50°C und 100°C, vorzugsweise von 50°C bis 70°C gemäß DSC-Messung aufweist.

10. Vliesfaser nach Anspruch 8 oder 9, **dadurch gekennzeichnet, dass** das zweite Polymer ein Ethylen-Alpha-Olefin-Copolymer ist.

11. Vliesfaser nach einem der vorhergehenden Ansprüche, **dadurch gekennzeichnet, dass** die Polymermischung aus Polysthylenhomo- und/oder copolymer besteht.

12. Verwendung einer Polymermischung, die als Basispolymer ein Polyethylen mit einem MFI zwischen 15 und 35, vorzugsweise 15 und 20 g/10 min nach ISO 1133 und einer Dichte von 0,935 bis 0,965 g/cm³ nach ASTM D-792 hat und die zumindest als zweites Polymer ein LLDPE mit einer Dichte zwischen 0,85 und 0,900 g/cm³ nach ASTM D-762 aufweist und wobei das Basispolymer zumindest 80 Gew-% der. Polymermischung ausmacht, zur Herstellung eines Vlieses mit einer Vliesfaser aus der Polymermischung.

13. Verwendung nach Anspruch 12, wobei das LLDPE zur Anhebung einer Dehnungselgenschaft der Vliesfaser genutzt wird.

14. Verwendung einer Polymermischung nach einem der vorhergehenden Ansprüche für ein Vlies als Haftvermittler zwischen zwei Lagen, zwischen denen das Vlies angeordnet wird.

15. Verwendung einer Polymermischung nach einem der vorhergehenden Ansprüche für ein Viles zur Herstellung eines Verbundes mit einer ersten, einer zweiten und einer dritten Lage, wobei die zweite Lage zwischen der ersten und der dritten Lage angeordnet wird, wobei die Lagen gedehnt und einer Hitze ausgesetzt werden und dabei die zweite Lage zumindest zu der ersten bzw. zu der zweiten Lage hin eine klebrige Eigenschaft entwickelt und einen Haftverbund zwischen der ersten und der dritten Lage schafft.

16. Verwendung nach einem der vorhergehenden Ansprüche 14 oder 15, wobei mehrere Lagen In eine Form gelegt, unter Druck und Hitze miteinander gedehnt, in eine Form gebracht und untereinander verbunden werden.

17. Verwendung nach einem der vorhergehenden Ansprüche 15 oder 16, wobei eine Geometrie einer Vliesfaser und/oder des Vlieses aufgrund einer Hitzewirkung aufgelöst wird.

18. Verwendung nach einem der vorhergehenden Ansprüche, wobei das Vlies bei einem Tiefziehvorgang verwendet wird.

19. Verwendung nach einem der vorhergehenden Ansprüche, wobei das Vlies als Hot-Melt-Ersatz genutzt wird.

20. Verwendung nach einem der vorhergehenden Ansprüche, wobei das Vlies zur Herstellung eines Autoteppichs genutzt wird.

## Claims

1. Nonwoven with a nonwoven fiber exhibiting a polymer mixture having as base polymer a polyethylene with an MFI between 15 and 35, preferably between 15 and 20 g/10 min per ISO 1133, and a density of 0.935 to 0.965 g/cm³ per ASTM D-792, and having as an at least second polymer an LLDPE with a density between 0.85 and 0.900 g/cm³ per ASTM D-762 and wherein the base polymer constitutes at least 80 weight percent of the polymer mixture.

2. Nonwoven according to claim 1 **characterized in that** the base polymer constitutes at least 80 weight percent of the polymer mixture, while the second polymer constitutes a weight of up to 20 weight percent of the polymer mixture.

3. Nonwoven according to claim 1 or 2 **characterized in that** the second polymer is a polyolefin with an MFI of 3 to 7 g/10 min per ISO 1133, and which advantageously exhibits a melting point with a range of 50°C and 100°C, preferably of 50°C to 70°C according to DSC measurement.

4. Nonwoven according to claim 1, 2 or 3 **characterized in that** the second polymer is an ethylene alpha olefin copolymer.

5. Nonwoven according to one of the previous claims **characterized in that** the polymer mixture consists of a polyethylene homo- and/or copolymer.

6. Nonwoven according to one of the previous claims **characterized in that** the nonwoven is arranged between two layers and which, upon application of heat creates an adhesive bond of the layers.

7. Nonwoven fiber from a polymer mixture with a polyethylene as base polymer with an MFI of between 15 and 35, preferably 15 and 20 g/10 min per ISO 1133, and a density of 0.935 to 0.965 g/cm³ per ASTM D-792, and of at least one second polymer in the form of an LLDPE with a density between 0.85 and 0.900 g/cm³ per ASTM D-762 and wherein the base polymer constitutes at least 80 weight percent of the polymer mixture.

8. Nonwoven fiber according to claim 7 **characterized in that** the base polymer constitutes at least 80 weight percent of the polymer mixture while the second polymer constitutes a weight of up to 20 weight percent of the polymer mixture.

9. Nonwoven fiber according to one of the previous claims **characterized in that** the second polymer exhibits a polyolefin with an MFI of 3 to 7 g/10 min per ISO 1133, and preferably a melting point in the range between 50°C and 100°C, preferably from 50°C to 70°C according to DSC measurement.

10. Nonwoven fiber according to claim 8 or 9, **characterized in that** the second polymer is an ethylene alpha olefin copolymer.

11. Nonwoven fiber according to one of the previous claims **characterized in that** the polymer mixture consists of polyethylene homo- and/or copolymer.

12. Utilization of a polymer mixture, exhibiting as base polymer a polyethylene with an MFI between 15 and 35, preferably 15 and 20 g/10 min per ISO 1133, and a density of 0.935 to 0.965 g/cm³ per ASTM D-792, and which exhibits at least as second polymer an LLDPE with a density of 0.85 to 0.900 g/cm³ per ASTM D-762 and wherein the base polymer constitutes at least 80 weight percent of the polymer mixture, for the manufacture of a nonwoven with a nonwoven fiber from the polymer mixture.

13. Utilization according to claim 12, wherein the LLDPE is used to increase the elongation property of the nonwoven fiber.

14. Utilization of a polymer mixture according to one of the previous claims for a nonwoven material as bonding agent between two layers between which the nonwoven material is placed.

15. Utilization of a polymer mixture according to one of the previous claims for a nonwoven material for the creation of a bond with a first, a second, and a third layer, wherein the second layer is located between the first and the third layer, wherein the layers are stretched and exposed to heat causing the second layer to develop an adhesive characteristic at least toward the first layer and toward the second layer respectively, and creating an adhesive bond between the first and the third layer.

16. Utilization according to one of the previous claims 14 or 15, wherein multiple layers are placed into a mold, stretched together while applying pressure and heat, molded into a shape and bonded to each other.

17. Utilization according to one of the previous claims 15 or 16, wherein the geometry of a nonwoven fiber and/or nonwoven material is dissolved due to application of heat.

18. Utilization according to one of the previous claims, wherein the nonwoven material is used in a deep-drawing process.

19. Utilization according to one of the previous claims, wherein the nonwoven material is used as hot-melt substitute.

20. Utilization according to one of the previous claims, wherein the nonwoven material is used for the manufacture of automotive carpet.

## Revendications

1. Non-tissé avec une fibre pour non-tissé qui comporte un mélange de polymères qui a comme polymère de base un polyéthylène avec un MFI compris entre 15 et 35, de préférence entre 15 et 20 g/10 min selon ISO 1133 et une densité de 0,935 à 0,965 g/cm³ selon ASTM D-792 et qui comporte comme deuxième polymère un LLDPE avec une densité de 0,85 à 0,900 g/cm³ selon ASTM D-792 et dans lequel le polymère de base constitue au moins 80 % en poids du mélange de polymères.

2. Non-tissé selon la revendication 1, **caractérisé en ce que** le polymère de base constitue au moins 80 % en poids du mélange de polymères, tandis que le deuxième polymère a une proportion pondérale de jusqu'à 20 % en poids dans le mélange de polymères.

3. Non-tissé selon la revendication 1 ou 2, **caractérisé en ce que** le deuxième polymère est une polyoléfine avec un MFI de 3 à 7 g/10 min selon ISO 1133 et de préférence un point de fusion dans un intervalle de 50 °C à 100 °C, de préférence de 50 °C à 70 °C d'après une mesure de calorimétrie différentielle à balayage.

4. Non-tissé selon l'une quelconque des revendications 1, 2 ou 3, **caractérisé en ce que** le deuxième polymère est un copolymère d'éthylène et d'une alpha-oléfine.

5. Non-tissé selon l'une quelconque des revendications précédentes, **caractérisé en ce que** le mélange de polymères consiste en homo- ou en copolymère de polyéthylène.

6. Non-tissé selon l'une quelconque des revendications précédentes, **caractérisé en ce que** celui-ci est disposé entre deux couches et crée un assemblage collé avec ces couches par l'effet de la chaleur.

7. Fibre de non-tissé en un mélange de polymères avec comme polymère de base un polyéthylène avec un MFI compris entre 15 et 35, de préférence entre 15 et 20 g/10 min selon ISO 1133 et une densité de 0,935 à 0,965 g/cm³ selon ASTM D-792 et en au moins un deuxième polymère sous la forme d'un LLDPE avec une densité comprise entre 0,85 et 0,900 g/cm³ selon ASTM D-792 et dans laquelle le polymère de base constitue au moins 80 % en poids du mélange de polymères.

8. Fibre de non-tissé selon la revendication 7, **caractérisée en ce que** le polymère de base constitue au moins 80 % en poids du mélange de polymères, tandis que le deuxième polymère a une proportion pondérale de jusqu'à 20 % en poids dans le mélange de polymères.

9. Fibre de non-tissé selon l'une quelconque des revendications précédentes, **caractérisée en ce que** le deuxième polymère est une polyoléfine avec un MFI de 3 à 7 g/10 min selon ISO 1133 et de préférence un point de fusion dans un intervalle de 50 °C à 100 °C, de préférence de 50 °C à 70 °C d'après une mesure de calorimétrie différentielle à balayage.

10. Fibre de non-tissé selon la revendication 8 ou 9, **caractérisée en ce que** le deuxième polymère est un copolymère d'éthylène et d'une alpha-oléfine.

11. Fibre de non-tissé selon l'une quelconque des revendications précédentes, **caractérisée en ce que** le mélange de polymères consiste en homo- ou en copolymère de polyéthylène.

12. Utilisation d'un mélange de polymères qui a comme polymère de base un polyéthylène avec un MFI compris entre 15 et 35, de préférence entre 15 et 20 g/10 min selon ISO 1133 et une densité de 0,935 à 0,965 g/cm³ selon ASTM D-792 et qui comporte au moins comme deuxième polymère un LLDPE avec une densité comprise entre 0,85 et 0,900 g/cm³ selon ASTM D-792 et dans laquelle le polymère de base constitue au moins 80 % en poids du mélange de polymères, à la fabrication d'un non-tissé avec une fibre de non-tissé en le mélange de polymères.

13. Utilisation selon la revendication 12, le LLDPE étant utilisé pour accroître une propriété d'étirement de la fibre du non-tissé.

14. Utilisation d'un mélange de polymères selon l'une quelconque des revendications précédentes pour un non-tissé comme intermédiaire d'adhérence entre deux couches entre lesquelles est disposé le non-tissé.

15. Utilisation d'un mélange de polymères selon l'une quelconque des revendications précédentes à la fabrication d'un non-tissé avec une première, une deuxième et une troisième couche, la deuxième couche étant disposée entre la première et la troisième couche, les couches étant étirées et soumises à une chaleur, lors de quoi la deuxième couche développe au moins par rapport à la première, respectivement la deuxième couche, une propriété collante et crée un assemblage par adhérence entre la première et la troisième couche.

16. Utilisation selon l'une quelconque des revendications précédentes 14 ou 15, plusieurs couches étant placées dans un moule, étirées ensemble moyennant pression et chaleur, mises en forme et assemblées entre elles.

17. Utilisation selon l'une quelconque des revendications précédentes 15 ou 16, une géométrie d'une fibre du non-tissé et/ou [une géométrie] du non-tissé étant défaite par suite d'un effet de chaleur.

18. Utilisation selon l'une quelconque des revendications précédentes, le non-tissé étant utilisé dans le cadre d'un processus d'emboutissage.

19. Utilisation selon l'une quelconque des revendications précédentes, le non-tissé étant utilisé comme succédané de colle thermofusible.

20. Utilisation selon l'une quelconque des revendications précédentes, le non-tissé étant utilisé à la fabrication d'une moquette d'automobile.
